# EUROPÄISCHE PATENTANMELDUNG

(11) **EP 1 649 916 A1**
(43) Veröffentlichungstag der Anmeldung: **26.04.2006**
(21) Anmeldenummer: 04025037.5
(22) Anmeldetag: 21.10.2004
(51) Int. Cl.: B01D 39/18

(54) **Filterschicht mit einer Faserstoff-Matrix aus Cellulose und Chitin und/oder mindestens partiell deacetyliertem Chitin**

(71) Anmelder: Filtrox AG, 9000 St. Gallen (CH)
(72) Erfinder: Ebert, Jürgen, Dr., 9500 Wil (CH)
(74) Vertreter: Müller, Christoph Emanuel

(57) **Zusammenfassung**

Die Erfindung betrifft eine Filterschicht enthaltend eine Faserstoff-Matrix und Filterhilfsmittel, welche bei zufrieden stellender Filterwirkung eine genügend langen Standzeit beim Einsatz von Materialien mit Cellulose lösenden und/oder mit Cellulose chemisch reagierenden Bestandteilen aufweist und die kostengünstig herstellbar ist.

Die Aufgabe wird erfindungsgemäss dadurch gelöst, dass die Faserstoff-Matrix Fasern aus Cellulose und Chitin- und/oder mindestens partiell deacetyliertem Chitin, insbesondere Chitosan, enthält.

## Beschreibung

Die Erfindung betrifft eine Filterschicht enthaltend eine Faserstoff-Matrix und Filterhilfsmittel.

Filterschichten sind für vielfältige Anwendungen in den unterschiedlichsten Zusammensetzungen bekannt.

Filterschichten, die vorwiegend zur Fest/Flüssigtrennung eingesetzt werden, besitzen im Allgemeinen eine Zellstofffaser-Matrix aus pflanzlicher Cellulose. Zur Bewältigung von anspruchsvollen Filtrationsaufgaben werden in die Zellstofffaser-Matrix Filterhilfsmittel eingebaut. Bei diesen handelt es sich üblicherweise um Kieselgure, Perlite, Aktivkohle und/oder PVPP.

Aus DE 3329385 A1 ist bekannt, dass die Standzeiten von gattungsgemässen Filterschichten bei gleichem Kläreffekt erheblich verlängert werden, wenn ein Teil des Zellstoffs durch kationisch modifizierten Zellstoff ersetzt wird.

Eine Vielzahl der bekannten Filterschichten und Filtermittel sind jedoch wenig geeignet für die Filtration im Zusammenhang mit Medien, die Cellulose lösende oder mit Cellulose chemisch reagierende Bestandteile enthalten.

Diese Bestandteile, zum Beispiel Cellulase-Enzym, führen zu einer schrittweisen Zerstörung der Zellstofffaser-Matrix und damit zu verkürzten Standzeiten.

In DE 4007693 A1 wird vorgeschlagen, ein Faserstoff-Gerüst aus miteinander verfilzten Polyolefin-Fibridteilchen auszubilden. Diese sind resistent gegen Cellulase.

Die Verwendung von Polymeren zum Aufbau des Faserstoff-Gerüsts führt jedoch zu Nachteilen. Zum einen ist die Herstellung mit einem hohen Kostenaufwand verbunden, da die Kunststofffasern wesentlich teurer als natürlicher Zellstoff sind. Zum anderen verschlechtert sich der Kläreffekt vor allem deshalb, da die Oberfläche von Polymerfasern nach aussen neutral, jedenfalls nicht filteraktiv sind und im Gegensatz zur Cellulose nur keine rein mechanische Filterwirkung haben.

Eine perfekte Resistenz gegen Cellulase ist nicht notwendig. Es geht vor allem um die Erhöhung der Standzeit des Faserstoffgerüsts, weil das Filtermittel durch den Eintrag von ausfiltriertem Material nach einer gewissen Betriebszeit verbraucht.

Es sind daher aus dem Stand der Technik Filterschichten bekannt, bei denen ein Teil des Zellstoffs durch Polyolefin-Fasern ersetzt wurde. Diese Filterschichten haben ebenfalls den Kostennachteil und neigen ausserdem dazu, entlang der Polymerfasern Filterkanäle zu bilden, durch die das Unfiltrat ungereinigt dringen kann.

Die Aufgabe der Erfindung besteht darin, eine Filterschicht zur Verfügung zu stellen, die bei zufrieden stellender Filterwirkung eine ausreichend lange Standzeit beim Einsatz von Materialien mit Cellulose lösenden und/oder mit Cellulose chemisch reagierenden Bestandteilen aufweist und die kostengünstig herstellbar ist.

Die Aufgabe wird erfindungsgemäss dadurch gelöst, dass die Faser-Matrix Cellulose und Chitin und/oder mindestens partiell deacetyliertes Chitin, insbesondere Chitosan enthält.

Chitin wird, wie die Cellulose, aus natürlichen, nachwachsenden Rohstoffquellen gewonnen. Es ist aus Abfällen von Schalentieren oder der Fermentation von Pilzen erhältlich ist. Es kann leicht biologisch abgebaut werden und stellt daher keine Umweltbelastung dar.

Chitin und sein Derivat Chitosan, das durch Deacetylierung aus Chitin herstellbar ist, sind den Menschen ungefährlich, sie sind hautverträglich, stören das Immunsystem nicht und können daher auch gut im Zusammenhang mit Lebensmitteln verwendet werden.

Aus natürlich vorkommendem Chitin und Chitosan lassen sich Fasern herstellen, die als Faserstoff-Matrix in einem Filtermittel eingesetzt werden können. Diese Fasern sind vergleichsweise preisgünstig.

Es hat sich gezeigt, dass Fasern aus Chitin oder Chitosan, im Gegensatz zu Polyolefin-Fasern, keine glatte, sondern eine feinstruktierte, filteraktive Oberfläche besitzen.

Überdies sind Chitin- und Chitosanmoleküle in der Lage, Viren, Bakterien und Schwermetalle zu binden, wodurch diese Materialien in besonderem Masse als Filtermittelbestandteil geeignet sind. Sie vermindern ausserdem den Pyrogeneintrag in das Filtrat.

Die Faserstoff-Matrix dient als mechanisches Gerüst der Filterschicht, in dem die Filterhilfsmittel angeordnet sind.

Ein Faserstoff-Gerüst, das nur aus Cellulose besteht, wird bei der Filtration von Fluiden, die Cellulose lösende und/oder mit Cellulose chemisch reagierende Bestandteile enthalten, insbesondere bestimmte Enzym- oder Proteinsysteme, durch Cellulase zersetzt. Die mechanische Stabilität der Filterschicht, die durch das Faserstoff-Gerüst geschaffen wird, nimmt daher entsprechend der Cellulase-Aktivität ab. Dies ist besonders dann von Nachteil, wenn die Filterschicht auch in Ruhephasen, z.B. über Nacht, wenn der eigentlich Filtervorgang nicht fortgesetzt wird, mit dem Unfiltrat in Kontakt bleibt. Die Filterschicht verbraucht sich in diesem Fall durch den Abbau der Cellulase und nicht durch den Filtervorgang.

Erfindungsgemäss wird die Faserstoff Matrix durch Chitin- und/oder Chitosan-Fasern verstärkt. Diese bewirken eine Stabilisierung der Faserstoff-Matrix, indem sie durch Unangreifbarkeit gegenüber Cellulase dafür sorgen, dass die mechanische Stabilität des Faserstoff-Gerüsts länger aufrechterhalten bleibt.

Andererseits bleibt die Matrix als solche auch bei Cellulase über einen gewissen Zeitraum erhalten, sodass ein Abstand zwischen den Filterhilfsmitteln gewahrt bleibt, damit deren Oberflächen zugänglich bleiben und die Filterwirkung aufrechterhalten wird.

Daher werden mit erfindungsgemässen Filterschichten längere Standzeiten erreicht.

Filterschichten mit einer erfindungsgemässen Faserstoff-Matrix sind besonders für die Filtration von Festkomponenten aus Flüssigkeiten geeignet. Die Filterschichten können jedoch für die Filtration jeglicher fluider Medien eingesetzt werden, z.B. von Gasen, wie Rauch, oder Dämpfen.

Die erfindungsgemässen Filterschichten können unter anderem in der Anschwemmfiltration eingesetzt werden, als Filterbeschichtung oder auch als in sich zusammenhaltende Filterelemente, wie pappenartige Filterbögen oder Filterpapier. Im letztgenannten Fall bildet die Faserstoff-Matrix ein Faserstoff-Gerüst, in welchem die Filterhilfsmittel eingelagert sind.

Als Filterhilfsmittel werden bevorzugt filteraktive Kieselgur-Teilchen und/oder Perlit Teilchen in die Faserstoff-Martix eingelagert. Diese können einzeln oder in Kombination verwendet werden. Auch Sepiolit kann eingesetzt werden. Die genannten Stoffe sind umweltverträglicher als ebenfalls geeignete Asbesthaltige Stoffe.

In einer vorteilhaften Ausführung der Erfindung weist die Filterschicht eine Nassfestmittelkomponente auf, insbesondere eine chemisch synthetisierte Nassfestmittelkomponente, wie Melamin-Formaldehyd, Formaldehyd-Harnstoff oder PAAE-Epichlorhydrin.

Die Nassfestmittelkomponente dient als Bindemittel, mit dessen Einsatz sich die Filterschicht als festes Filtermodul ausbilden lässt.

Als Bindemittel und zur Erhöhung der Reissfähigkeit können weiterhin Polyisocyanate/Polyurethane, Carboxymethylcellulose und hochmolekulare Polyvinylamine eingesetzt werden.

In einer vorteilhaften Ausführungsform weisen die Filterschichten einen Nassfestmittelanteil von 0.5 bis 3 % bezogen auf den Faseranteil auf. Auch hochgeharzte Schichten mit einem Gewichtsanteil des Nassfestmittels von circa 4% bis zu 8% bezogen auf den Faseranteil können gefertigt werden.

Bei der Fertigung hochgeharzter Filterschichten ist jedoch zu bedenken, dass z.B. PAAE-Harze Verunreinigungen an Monochlorpropandiol und Dichlorpropanol enthalten können, deren Grenzwerte eventuell überschritten werden. Harze mit ausgewiesen niedriger Verunreinigungskonzentration sind wesentlich teurer und oft schwächer in der Wirkung.

Überdies sind der Nassreissfestigkeit, die mit den Harzen erzielt werden soll, Grenzen gesetzt. Der Grenzwert der Wirksamkeit ist bei einem Gewichtsanteil von etwa 8% bezogen auf den Faseranteil erreicht.

Ein zu hoher Harzanteil bereitet Schwierigkeiten bei der Herstellung und in der Anwendung der Filterschichten. Während des Herstellungsprozesses kann die Filterschicht auf einem Ofensieb kleben bleiben, bei der Lagerung besteht die Gefahr, dass unerwünschte Nachhärtprozesse ablaufen und bei der Filtration kann die Filterschicht ebenfalls an einer Auflagefläche des Filterelements anhaften. Vor Beginn der Filtration muss überschüssiges Harz in einem langwierigen Prozess ausgewaschen werden.

In einer vorteilhaften Ausführungsform weisen die Fasern aus Chitin- und/oder mindestens partiell deacetyliertem Chitin, insbesondere Chitosan, eine Länge auf, welche in der Grössenordnung der Faserlänge der Cellulose liegt, bevorzugt 0.5-2 mm, insbesondere in etwa 1mm. Der Faserstoff mit Fasern aus Celluse- und Chitin- und/oder mindestens partiell deacetyliertem Chitin, insbesondere Chitosan, bildet dann eine Matrix, welche der für viele Anwendungen bewährten Zellstofffaser-Matrix entspricht, und in die sich das Filterhilfsmittel in gewohnter Weise einlagern kann.

Für eine ausreichende Widerstandskraft gegen Cellulase besitzen die Fasern aus Chitin- und/oder mindestens partiell deacetyliertem Chitin, insbesondere Chitosan, einen Gewichtsanteil von 5% - 50% an der gesamten Masse der Filterschicht.

Faserstoff-Matrix und Filterhilfsmittel liegen in etwa dem gleichen Gewichtsanteil an der Gesamtmasse der Filterschicht vor.

In einem bevorzugten Ausführungsbeispiel beträgt die Faserstoff-Matrix 45% - 65%, vorzugsweise etwa 55% des Gesamtgewichtes der trockenen Filterschicht. Der Gewichtsanteil der Fasern aus Chitin- und/oder mindestens partiell deacetyliertem Chitin beträgt dabei 10% bis 20%, vorzugsweise etwa 15% bezogen auf den Faseranteil.

Die erfindungsgemässen Filterschichten weisen bevorzugt eine Dicke von 2-5mm, insbesondere 3.2-4.5mm, auf.

In einer vorteilhaften Ausführung besitzen sie ein Flächengewicht von 1000-1500g/m².

Die Filterschichten lassen sich somit in allen üblichen Abmessungen herstellen, beispielsweise in Abmessungen zwischen 200 x 200 mm und 1205 x 2425 mm, gestanzt mit zwei oder vier Löchern, bzw. als runde Schichten mit Durchmessern von 60 mm bis 800mm mit einem Zentralloch oder zwei Löchern.

Ausserdem können Modulschichten von beispielsweise 12" , entsprechend 283 mm, oder 16", entsprechend 394 mm, gestanzt werden, die jeweils zu zweit umspritzt werden und eine Modullinse bilden.

Aus den natürlichen Rohstoffen der Filterschichten können lösliche Erdalkali- und Schwermetallionen partiell oder vollständigentfernt werden, sodass die Schichten für Applikationen mit besonderen Reinheitsanforderungen im Hinblick auf Ionen, Pyrogenen u.a. eingesetzt werden können.

Erfindungsgemässe Filterschichten finden Anwendungen unter anderem in der chemischen, pharmazeutischen und biotechnologischen Industrie. Sie eigenen sich zum Beispiel für den Einsatz im Zusammenhang mit der Abtrennung von Zellen oder Zellresten aus Fermentationsmedien, der Partikelfiltration von Impfstoffen, der Partikelfiltration von Serum- und Plasmalösungen, der Aufreinigung von Reagenzien, der Aufreinigung von Lösemitteln, der Partikelfiltration von Bulkware, der Filtration von kosmetischen Ölen, der Vorfiltration, dem Down stream processing, der Aktivkohleabtrennung und vielem mehr.

Die Herstellung der Filterschichten erfolgt mit den üblichen Verfahrensschritten:

Die Fasermischung wird in einen Pulper eingetragen, wo mit Wasser ein Faserbrei hergestellt wird. Es folgt das Mahlen der Fasern in einem Refiner, die danach in eine Mischbütte umgefüllt werden. Nassfestmittel, Kieselgur und/oder Perlit werden zugegeben.

Vom Stoffauflauf geht das Material auf ein Langsieb, wo die Mischung entwässert wird und eine gleichmässige dreidimensionale Netzstruktur gebildet wird.. Am Ende der Nasspartie wird die Filterschicht in die Trockenpartie geführt. Die Filterschicht wird auf einem Metallsieb in einem Trockenofen getrocknet, wobei gleichzeitig das Nassfestmittel aushärtet.

Nach der Trockenpartie werden die Filterschichten mit einem Wasserstrahl geschnitten oder mit einem Stanzmesser ausgestanzt, wonach die Schichten verpackt und/oder ihrer weiteren Bestimmung zugeführt werden.

Tabelle 1 zeigt die Standzeit unterschiedlicher Filterschichten beim Filtern von Unfiltraten mit Cellulase im Vergleich zueinander.

Die Wirkung der Cellulase lässt sich in drei Stufen einteilen. Als eine erste Folge tritt die Quellung des Materials auf, in einer zweiten Stufe beginnt die Filterschicht zu zerfallen und schliesslich, in der dritten Stufe, ist die Filterschicht durch Zerfall zerstört. Die Filtrationswirkung wurde bei dieser Untersuchung nicht berücksichtigt.

Bei Material 1 handelt es sich um ein Produkt, in welchem das Faserstoff-Gerüst Kunststofffasern enthält, Material 2 ist eine hochgeharzte Filterschicht aus Cellulosefasern und Kieselgur mit einem Harzanteil von etwa 4% bezogen auf den Faseranteil, Material 3 eine herkömmliche Filterschicht aus Cellulosefasern und Kieselgur mit einem Harzanteil von unter 3% bezogen auf den Faseranteil, Material 4 enthält einen Anteil von etwa 5% Chitinfasern am Gesamtgewicht und Material 5 einen Anteil von etwa 3% Chitinfasern am Gesamtgewicht.

Die Tabelle zeigt, dass Material 1 erst bei hohen Cellulase-Anteilen zu quellen beginnt.

Auch das hochgeharzte Material 2 zeigt erst bei starker Cellulose einen beginnenden Zerfall.

Die Filterschicht aus Material 3 mit herkömmlicher Zusammensetzung zeigt bereits bei schwacher Cellulase Quellung und schon bei mittlerer Cellulase einen Zerfall.

Material 4, das einen Chitinfaseranteil von 10% besitzt widersteht der Cellulase so gut wie Material 1, erst bei starker Cellulase beginnt die Quellung des Materials. Beträgt der Chitinfaseranteil hingegen nur 7,5%, so setzt ein leichter Zerfall der Filterschicht bereits bei mittlerer Cellulase ein.

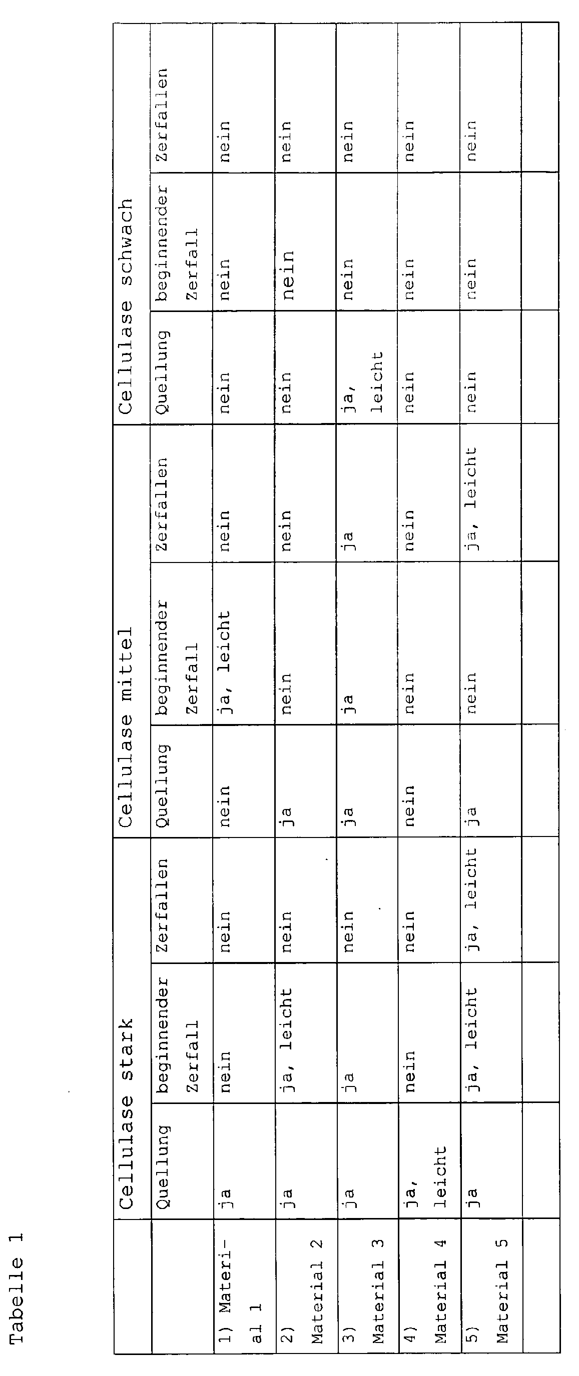

## Patentansprüche

1. Filterschicht enthaltend eine Faserstoff-Matrix und Filterhilfsmittel, wobei die Faserstoff-Matrix Fasern aus Cellulose und Chitin- und/oder mindestens partiell deacetyliertem Chitin, insbesondere Chitosan, enthält.

2. Filterschicht gemäss Anspruch 1, **dadurch gekennzeichnet, dass** als Filterhilfsmittel filteraktiven Kieselgur-Teilchen und/oder Perlit Teilchen in die Faserstoff-Matrix eingelagert sind.

3. Filterschicht gemäss einem der vorhergehenden Ansprüche, **dadurch gekennzeichnet, dass** die Filterschicht eine Nassfestmittelkomponente, insbesondere eine chemisch synthetisierte Nassfestmittelkomponente, wie Melamin-Formaldehyd, Formaldehyd-Harnstoff oder PAAE-Epichlorhydrin, enthält.

4. Filterschicht gemäss einem der vorhergehenden Ansprüche, **dadurch gekennzeichnet, dass** Fasern aus Cellulose und Chitin- und/oder mindestens partiell deacetyliertem Chitin, insbesondere Chitosan, eine Länge aufweisen, welche in der Grössenordnung der Faserlänge der Cellulose liegt, bevorzugt 0.5-2 mm.

5. Filterschicht gemäss einem der vorhergehenden Ansprüche, **dadurch gekennzeichnet, dass** die Faserstoffmatrix einen Gewichtsanteil von 50-100% an der gesamten Masse besitzt.

6. Filterschicht gemäss einem der vorhergehenden Ansprüche, **dadurch gekennzeichnet, dass** die Fasern aus Cellulose und Chitin- und/oder mindestens partiell deacetyliertem Chitin, insbesondere Chitosan, einen Gewichtsanteil von 5-50% an der gesamten Masse besitzen.

7. Filterschicht gemäss einem der vorhergehenden Ansprüche, **dadurch gekennzeichnet, dass** die Filterschicht eine Dicke von 2-5mm aufweist.

8. Filterschicht gemäss einem der vorhergehenden Ansprüche, **dadurch gekennzeichnet, dass** die Filterschicht ein Flächengewicht von 1000-1500 g/m² aufweist.

9. Verwendung von Fasern aus Cellulose und Chitin- und/oder mindestens partiell deacetyliertem Chitin, insbesondere Chitosan,zur Stabilisierung der Cellulose-Fasern enthaltenden Faserstoff-Matrix einer Filterschicht.

10. Verfahren zur Herstellung einer Filterschicht, die für Fest/Flüssigtrennung von Cellulose lösende und/oder mit Cellulose chemisch reagierende Bestandteile aufweisende Medien geeignet ist, mit den folgenden Verfahrensschritten:
(i) Eintragung von Fasern in einen Pulper,
(ii) Herstellung eines Faserbreis mit Wasser,
(iii) Mahlen der Fasern in einem Refiner,
(iv) Umfüllen in eine Mischbütte,
(v) Zugabe von Nassfestmittel, Kieselgur und/oder Perlit,
(vi) Umfüllen in den Stoffauflauf,
(vii) Entwässern auf einem Langsieb,
(viii) gleichmässiges Verteilen der Fasern und Ausbildung der Netzstruktur,
(ix) Entwässern,
(x) Trocknung,
(xi) Zuschneiden und/oder Austanzen,
**dadurch gekennzeichnet, dass** es sich bei den Fasern um Fasern aus Cellulose und Chitin- und/oder mindestens partiell deacetyliertem Chitin, insbesondere Chitosan, handelt.
